# EUROPEAN PATENT SPECIFICATION

(11) **EP 4 079 285 B1**
(45) Date of publication and mention of the grant of the patent: **12.08.2026**
(21) Application number: 22382265.1
(22) Date of filing: 22.03.2022
(51) Int. Cl.: A61K 8/02, C08L 75/04, C08G 101/00

(54) **MAKEUP SPONGE**
MAKE-UP-SCHWAMM
ÉPONGE DE MAQUILLAGE

(30) Priority: 21.04.2021 ES 202130817 U
(43) Date of publication of application: 26.10.2022
(73) Proprietor: Schmuckstuck Group, S.L., 29620 Torremolinos (Málaga) (ES)
(72) Inventor: Zegoum Nie, Karima, 29620 TORREMOLINOS (Málaga) (ES); Zegoum Nie, Meriem, 29620 TORREMOLINOS (Málaga) (ES); Ezzahra Zegoum, Faima, 29620 TORREMOLINOS (Málaga) (ES)
(74) Representative: Díaz de Bustamante y Terminel, Isidro

(56) References cited:
- WO-A1-2020/010466
- US-A1- 2015 329 665
- US-A1- 2016 262 403

## Description

### OBJECT OF THE INVENTION

The invention, as exposed on the wording of the present specification, refers to a makeup sponge which imparts to the function it is intended to, advantages and characteristics, which are described in detail below, which are an improvement of the current state of the art. The invention is set out in the appended set of claims

More specifically, the object of the invention focuses on a sponge of those intended for use in applying make-up, be it liquid, cream or concealer, which, in addition to its ergonomic drop-shaped configuration that makes it especially optimal for the use to which it is intended, has the innovative feature of being made from a mixture of latex-free polyurethane and powder of one or more aromatic and/or dermoactive natural products, chosen from a wide list that is included below, which give it an aroma and/or favour skin care with each use, expanding the versatility of the sponge by increasing sensory and/or dermatologically the mechanical function to which it is intended as a means for applying cosmetics to the face, neck or other areas of the body.

### APPLICATION FIELD OF THE INVENTION

The application field of the present invention is framed within the sector of the industry dedicated to the manufacture de cosmetic accessories, focusing particularly on the field of sponges for applying make-up.

### BACKGROUND OF THE INVENTION

As a reference to the current state of the art, it should be noted that, although different types and models of sponges are known for applying make-up and creams to the face or other parts of the body, at least by the applicant, the existence of none that presents technical, structural and constitutive characteristics equal or similar to those presented by the one here claimed is unknown, since most of them are usually made from pieces of foam, normally polyurethane, without any type of additional product or agent that improves sensory or dermatologically its use.

"Document US2015329665A1 discloses a novel hydrophilic polymer foam comprising maltodextrin, the wickability properties of which are improved with respect to a conventional hydrophilic polymer foam.

Document US2016262403A1 discloses methods and combinations for making and using one or more cellular foam layers comprising flexible cellular foam and wood particles having aromatic properties.

Document WO2020010466A1 discloses a drop-shaped makeup blending sponge comprising a foam core and a layer of coating ".

### EXPLANATION OF THE INVENTION

The makeup sponge that the invention proposes represents an improved alternative to what is already known, the characterizing details that make it possible and that conveniently distinguish it being collected in the final claims that accompany this description.

What the invention proposes, as noted above, is a sponge of those intended for use in applying make-up, be it liquid, cream or concealer, which, in addition to preferably having a novel and ergonomic drop-shaped configuration that makes it especially optimal for the use to which it is intended, it is essentially distinguished by the fact that it presents the innovative feature of being made from a mixture of latex-free polyurethane and powder of one or more aromatic and/or dermoactive natural products, chosen from a wide list that is included below, which give it an aroma and/or favour skin care with each use, expanding the versatility of the sponge by increasing sensory and/or dermatologically the mechanical function to which is intended as a means for applying cosmetics to the face, neck or other areas of the body.

More specifically, regardless of its shape, the sponge of the invention is made with a material obtained by injection and made up from a mixture composed of latex-free polyurethane and between 50% and 70% of a powder of one or more aromatic and/or dermoactive natural products.

Preferably, the sponge material is a mixture composed of 50% latex-free polyurethane and 50% powder of the aromatic and/or dermoactive natural product or products.

The aromatic natural product or products that is added in powder form to the polyurethane mixture of the sponge of the invention is a natural product chosen from among the following:
100% natural orange powder
100% natural lemon powder
100% natural almond powder
100% natural avocado powder
100% natural olive powder
100% natural dragon fruit or pitahaya powder
100% natural lavender powder
100% natural rose powder
100% natural carrot powder
100% natural mango powder
100% natural aloe vera powder
100% natural bamboo charcoal powder
100% natural rice or rice husk powder
100% natural papaya powder
100% natural gardenia powder
100% natural honeysuckle powder
100% natural coffee powder
100% natural blackberry powder
100% natural pearl powder
100% natural sea buckthorn powder
100% natural green tea powder.
100% natural black tea powder
100% natural coconut shell powder

For its part, the dermoactive product or products that is added in powder form to the polyurethane mixture of the sponge of the invention is a natural product or not, chosen from among the following:
Astaxanthin powder
Collagen powder
Hyaluronic acid powder
Vitamin A powder
Vitamin E powder
Omega 3 powder
Niacinamide powder
Vitamin C powder

Preferably, the sponge material is a mixture composed of 50% latex-free polyurethane and 50% powder of a single product of the aforementioned, either a 100% natural aromatic product, which provides aroma to the sponge in each use, or a dermoactive product that favours skin care.

In any case, in the preferred embodiment of the invention, the makeup sponge has a drop-shaped configuration, which facilitates its grip and use. In addition, optionally, said drop shape has a cut in the curved and widest part of it made bevelled that defines an inclined and flat base intended to provide a larger surface for applying the make-up, cream or product in question facilitating its homogeneous spread on the skin.

Finally, it is worth mentioning that, to optimize the use of the sponge, which can be both wet and dry, due to the natural ingredients of its composition, the manufacturer recommends washing and air-drying the sponge after each use, as well as keeping it in a dry place to prevent it from losing its properties and generating mould.

### DESCRIPTION OF THE DRAWINGS

In order to complement the description being made and to ease a better understanding of the characteristics of the invention, we attach to the present specification, making part of the same, a set of layouts where, with an illustrative non limitative character, the following has been represented:
Figure number 1.- Shows a schematic elevation view of an example of embodiment of the makeup sponge object of the invention, showing its drop-shaped configuration.
Figures number 2 and 3.- Show respective front and side elevation views, respectively, of another example of embodiment of the makeup sponge according to the invention, in this case an example in the form of a drop with a flat inclined base.

### PREFERRED EMBODIMENT OF THE INVENTION

In light of the mentioned figures, and according to the numbering taken on them, can be seen in them respective examples of non-limiting embodiment of the makeup sponge of the invention.

Thus, as can be seen in said figures, the makeup sponge of the invention is made up of a body (1) obtained by injecting a material made up from a mixture composed of latex-free polyurethane and between 50% and 70% of powder of one or more aromatic and/or dermoactive natural products, although preferably said mixture is composed of 50% latex-free polyurethane and 50% powder of the aromatic and/or dermoactive natural product or products.

The aromatic natural product or products that is added in powder form to the polyurethane mixture is a 100% natural product chosen from: orange, lemon, almonds, avocado, olives, dragon fruit, lavender, roses, carrot, mango, aloe vera, bamboo charcoal, rice or rice husk, papaya, gardenia, honeysuckle, coffee, blackberry, pearl, sea buckthorn, green tea, black tea, and coconut shell.

The dermoactive product or products that are added in powder form to the polyurethane mixture is a product, natural or not, chosen from: astaxanthin, collagen, hyaluronic acid, vitamin A, vitamin E, omega 3, niacinamide and vitamin C.

In the preferred embodiment, the sponge material is a mixture composed of 50% latex-free polyurethane and 50% powder of a single product, either 100% natural aromatic or dermoactive.

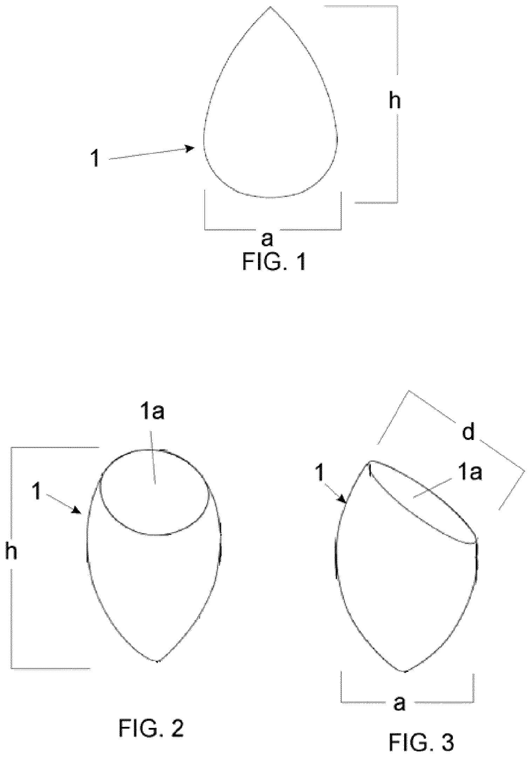

In any case, preferably, the body (1) of the sponge has a drop-shaped configuration, that is, spherical on one side and pointed on the other, as shown in the example of figure 1 .

Preferably, said drop-shaped body (1) has approximate dimensions of about 40 mm wide (a) by 60 mm high (h).

Optionally, the drop-shaped body (1) has a cut, in the curved and widest part thereof, which defines a base (1a) with an inclined and flat surface.

Preferably said base (1a) has a diameter (d) of approximately 40 mm.

## Claims

1. - Makeup sponge made up of a body (1) obtained by injecting a material made up from a mixture composed of latex-free polyurethane and between 50% and 70% of powder of one or more aromatic and/or dermoactive products,
**characterized in that** the aromatic product or products added in powder form to the polyurethane is a 100% natural product chosen from: orange, lemon, almonds, avocado, olives, dragon fruit, lavender, roses, carrot, mango, aloe vera, bamboo charcoal, rice or rice husk, papaya, gardenia, honeysuckle, coffee, blackberry, pearl, sea buckthorn, green tea, black tea, and coconut shell,
**and in that** the dermoactive product or products added in powder form to the polyurethane is chosen from: astaxanthin, collagen, hyaluronic acid, vitamin A, vitamin E, omega 3, niacinamide and vitamin C.

2. Makeup sponge according to claim 1, wherein the material is a mixture composed of 50% latex-free polyurethane and 50% powder of the aromatic and/or dermoactive product or products.

3. Makeup sponge according to any of the preceding claims, wherein the material of the sponge is a mixture composed of 50% latex-free polyurethane and 50% powder of a single product, either 100% aromatic or dermoactive.

4. Makeup sponge according to any of the preceding claims, wherein the body (1) has a drop-shaped configuration.

5. Makeup sponge according to claim 4, wherein the drop-shaped body (1) has a cut, in the curved and widest part thereof, which defines a base (1a) with an inclined and flat surface.

## Patentansprüche

1. - Make-up-Schwamm, bestehend aus einem Körper (1), der durch Einspritzen eines Materials hergestellt wird, das aus einer Mischung aus latexfreiem Polyurethan und zwischen 50 % und 70 % Pulver aus einem oder mehreren aromatischen und/oder dermoaktiven Produkten besteht,
**dadurch gekennzeichnet, dass** das oder die aromatischen Produkte, die dem Polyurethan, ein zu 100 % natürliches Produkt sind, das ausgewählt ist aus: Orange, Zitrone, Mandeln, Avocado, Oliven, Drachenfrucht, Lavendel, Rosen, Karotte, Mango, Aloe Vera, Bambuskohle, Reis oder Reisschalen, Papaya, Gardenie, Geißblatt, Kaffee, Brombeere, Perle, Sanddorn, 10 Grüntee, Schwarztee und Kokosnussschale, und dadurch, dass das oder die dem Polyurethan in Pulverform zugesetzten dermoaktiven Produkte ausgewählt sind aus: Astaxanthin, Kollagen, Hyaluronsäure, Kalium, Vitamin A, Vitamin E, Omega-3, Niacinamid und Vitamin C.

2. Make-up-Schwamm nach Anspruch 1, wobei das Material eine Mischung aus 50 % latexfreiem Polyurethan und 50 % Pulver des aromatischen und/oder der dermoaktiven Substanz(en) ist.

3. Make-up-Schwamm nach einem der vorstehenden Ansprüche, wobei das Material des Schwamms eine Mischung aus 50 % latexfreiem Polyurethan und 50 % Pulver eines einzigen Produkts ist, das entweder zu 100 % aromatisch oder dermoaktiv ist.

4. Make-up-Schwamm nach einem der vorstehenden Ansprüche, wobei der Körper (1) eine tropfenförmige Gestalt aufweist.

5. Make-up-Schwamm nach Anspruch 4, wobei der tropfenförmige Körper (1) an seiner gekrümmten und breitesten Stelle einen Einschnitt aufweist, der eine Basis (1a) mit einer geneigten und flachen Oberfläche bildet.

## Revendications

1. - Éponge de maquillage constituée d'un corps (1) obtenu par moulage par injection d'un matériau composé d'un mélange de polyuréthane sans latex et de 50 % à 70 % de poudre d'un ou plusieurs produits aromatiques et/ou dermoactifs,
**caractérisée en ce que** le ou les produits aromatiques ajoutés sous forme de poudre au polyuréthane est un produit 100 % naturel choisi parmi : l'orange, le citron, les amandes, l'avocat, les olives, fruit du dragon, la lavande, les roses, la carotte, la mangue, l'aloe vera, le charbon de bambou, le riz ou la balle de riz, la papaye, le gardénia, le chèvrefeuille, le café, la mûre, la perle, l'argousier, 10 le thé vert, le thé noir et la coque de noix de coco, et **en ce que** le ou les produits dermoactifs ajoutés sous forme de poudre au polyuréthane sont choisis parmi : l'astaxanthine, le collagène, l'acide hyaluronique, potassium, la vitamine A, la vitamine E, les oméga-3, la niacinamide et la vitamine C.

2. Éponge de maquillage selon la revendication 1, dans laquelle le matériau est un mélange composé de 50 % de polyuréthane sans latex et de 50 % de poudre du ou des produits aromatiques et/ou dermoactifs.

3. Éponge à maquillage selon l'une quelconque des revendications précédentes, dans laquelle le matériau de l'éponge est un mélange composé de 50 % de polyuréthane sans latex et de 50 % de poudre d'un seul produit, soit 100 % aromatique, soit dermoactif.

4. Éponge à maquillage selon l'une quelconque des revendications précédentes, dans laquelle le corps (1) présente une configuration en forme de goutte.

5. Éponge de maquillage selon la revendication 4, dans laquelle le corps (1) en forme de goutte présente une découpe, au niveau de sa partie courbée et la plus large, qui définit une base (1a) dotée d'une surface inclinée et plane.
